# EUROPEAN PATENT APPLICATION

(11) **EP 4 621 224 A1**
(43) Date of publication of application: **24.09.2025**
(21) Application number: 24176325.9
(22) Date of filing: 16.05.2024
(51) Int. Cl.: F03G 3/00

(54) **ENERGY STORAGE**

(30) Priority: 22.03.2024 PL 44807424
(71) Applicant: Akademia Gorniczo-Hutnicza im. Stanislawa Staszica w Krakowie, 30-059 Krakow (PL)
(72) Inventor: Sliwa, Tomasz, 32-020 Wieliczka (PL); Sapinska-Sliwa, Aneta, 32-020 Wieliczka (PL); Drosik, Jakub, 42-600 Tarnowskie Góry (PL)
(74) Representative: Rogozinska, Alicja

(57) **Abstract**

Energy storage, comprising a system for collecting and converting gravitational energy, is characterized in that the working space of a weight (3) is a tube (2), filled with a heat carrier and being a part of a structure of a borehole heat exchanger installed in a borehole (1).

## Description

The subject matter of the invention is an energy storage applicable in the fields of energy, related to renewable energy sources.

Gravitational energy storages are known, in which surplus electrical energy, derived from renewable energy sources (RES), such as photovoltaics or wind turbines, is used to increase the potential energy of the mechanical system, by performing work to lift a weight by means of a string wound on a winch drum in an equipotential gravitational field. When there is a shortage of electrical energy, the weight is descending, while the kinetic energy of the winch drum or shaft is converted by known means into electrical energy, which is then returned to the power network or to the consumer. This type of solutions, additionally using existing infrastructure, namely inactive pit shafts, as the space in where the lifting and descending of the weight takes place, are known from among others an international patent application WO2013/005056A1, an European patent application EP3990780A1. The concept of such solution can also be found on the Gravitricity website:
(https://web.archive.org/web/20231120083102/https://euanmearns.com/short-term-energy-storage-with-gravitricity-iron-versus-ion/).

Borehole heat exchangers are also known, among which the most popular is a structure containing a single U-tube, as disclosed in Korean patent application KR10-2018-0032253A. In practice, double U-tube designs and exchangers with a concentric design are also encountered. Borehole waste heat storages, such as the one disclosed in Canadian patent application CA2638235A1, using a concentric tube arrangement, are also known.

The invention solves the technical problem of utilizing new and existing boreholes to store thermal energy and gravitational energy.

An energy storage comprises at least one winch, equipped with a drum and an electric motor, said electric motor having a function of an electric current generator, connected to a receiving power network and to a supply network, wherein a string is wound on the drum, at an end of which at least one weight is suspended, located within a working space under a ground surface. The essence of the energy storage according to the invention is that the working space of the weight is at least one tube filled with a heat carrier and being a part of a structure of a borehole heat exchanger installed in a borehole.

It is advantageous that the winch is equipped with a mechanism for braking and regulating a rotational speed of the drum.

It is also advantageous that the power supply network is a physical integration of renewable energy sources such as photovoltaic cells or wind turbines.

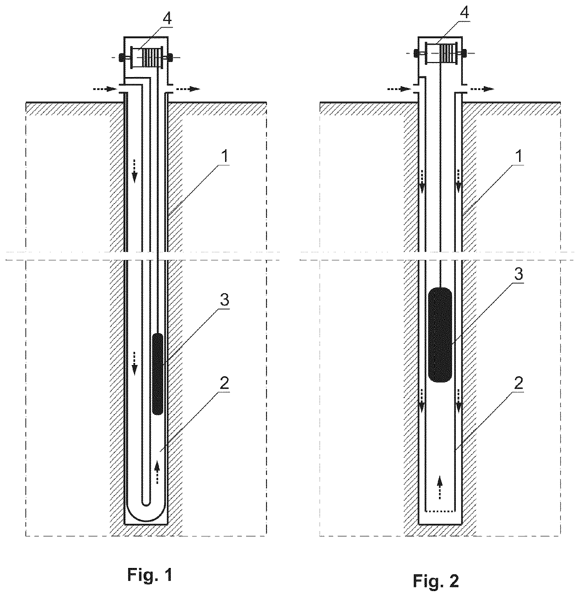

The object of the invention is visualized in an embodiment in the drawing, in which fig. 1 shows a variant of the energy storage with a borehole heat exchanger in a single U-tube arrangement, and fig. 2 - in a concentric tube arrangement.

The borehole 1 has installed an U-shaped tube arrangement 2 (fig. 1), which is filled with the heat carrier that comprises an aqueous glycol solution. The tube arrangement 2 is a structural element of the borehole heat exchanger. The ends of the U-tube are connected to a heat pump on the surface. Inside the tube 2, which comprises one of the arms of the U-tube, there is a weight 3 suspended by means of a string wound on the winch drum 4 located on the ground surface, provided with the electric motor and the mechanism for braking and regulating the rotational speed of the drum. The electric motor is integrated into the drum and has a function of operating as the electric current generator. The electric motor is connected to the power supply network, in which the electric current comes from renewable energy sources (RES), namely a set of photovoltaic cells, and is also connected via an inverter to the receiving power network.

In an analogous embodiment of the invention, not shown on the figure, the U-tube is not symmetrical and its arm, which is the tube 2, that houses the weight 3, has a diameter larger than the diameter of its other arm.

An exemplary variant of the invention using two U-tubes and two weights 3 is also possible.

In another embodiment, not shown in the figure, the invention has an arrangement of three parallel arms connected at the bottom, with two arms having smaller diameters and serving to supply the heat carrier, while the discharge arm has a larger diameter and constitutes a working space for the weight 3.

In another design example (fig. 2), the weight 3 is located in the working space, which constitutes the space of the inner column of tubes 2 of the borehole heat exchanger of concentric design. The electric motor of the winch 4 is connected to the supply network, where the electric current comes from a renewable energy source (RES), which constitutes a set of wind turbines.

In other embodiments of the invention, the electric motor of the winch 4 is powered directly from the power network.

The operation of the energy storage according to the invention, is that the excess electric energy produced in the daily cycle by the RES or by the power plant, is used as energy to supply the electric motor of the winch 4 to lift the weight 3, that is to increase the potential energy of the system. During hours of increased demand for electric energy, this energy is converted into kinetic energy of the rotational motion of the drum, which in turn is used to produce electric energy by the electric motor, which operates in the mode of an electric generator. Apart from storing and converting gravitational energy, the borehole heat exchanger is in operation, which can operate in continuous mode or in a seasonal cycle as part of the storage of excess heat or cold, stored in the rock mass in which the borehole 1 was drilled.

## Claims

1. Energy storage comprising at least one winch, equipped with a drum and an electric motor, said electric motor having a function of an electric current generator, connected to a receiving power network and to a supply network, wherein a string is wound on the drum at an end of which at least one weight is suspended, located within a working space under a ground surface, **characterized in that** the working space of the weight (3) is at least one tube (2) filled with a heat carrier and being part of a structure of a borehole heat exchanger installed in a borehole (1).

2. Energy storage, according to claim 1, **characterized in that** the winch (4) is additionally provided with a mechanism for braking and regulating a rotational speed of the drum.

3. Energy storage, according to claim 1, **characterized in that** the power supply network is a physical integration of renewable energy sources, such as photovoltaic cells or wind turbines.
